(19) Europäisches Patentamt
European Patent Office
Office européen des brevets

(11) Numéro de publication: **0 031 555**
**B1**

(12) **FASCICULE DE BREVET EUROPEEN**

(45) Date de publication du fascicule du brevet: 21.11.84

(51) Int. Cl.$^3$: **H 01 B 3/04**, H 02 K 3/30

(21) Numéro de dépôt: 80108039.1

(22) Date de dépôt: 19.12.80

(54) **Isolant pour bobinages à haute et moyenne tension et procédé de fabrication d'un tel isolant.**

(30) Priorité: 26.12.79 FR 7931657

(43) Date de publication de la demande:
08.07.81 Bulletin 81/27

(45) Mention de la délivrance du brevet:
21.11.84 Bulletin 84/47

(84) Etats contractants désignés:
AT BE CH DE FR GB LI SE

(56) Documents cités:
DE-A-1 613 273
US-A-2 585 115

(73) Titulaire: ALSTHOM-ATLANTIQUE Société anonyme dite:
38, Avenue Kléber
F-75784 Paris Cédex 16 (FR)

(72) Inventeur: Anton, Alain
Clos de L'Eglise Rue de Beauregard
F-69360 Saint Symphorien D'Ozon (FR)
Inventeur: Thiriet, Joel
114, rue du ler Mars 1943
F-69100 Villeurbanne (FR)

(74) Mandataire: Weinmiller, Jürgen et al
Zeppelinstrasse 63
D-8000 München 80 (DE)

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

Courier Press, Leamington Spa, England.

EP 0 031 555 B1

## Description.

La présente invention concerne un isolant pour bobinages à haute et moyenne tension, en particulier de machines électriques, comprenant un ruban à base de mica ou de papier de mica collé sur un support en tissu ou feutre de fibres de verre ou de résine synthétique, à l'aide d'un adhésif comprenant le produit de condensation d'une polyamine de formule générale

$$H_2N—(CH_2)_n—[NH—(CH_2)_p]_q—NH_2$$

dans laquelle n et p sont des nombres entiers de 1 à 5, et q est un nombre entier de 0 à 5, avec une résine époxyde, ledit ruban étant, après enroulement sur un conducteur, imprégné d'une résine d'imprégnation comprenant une résine époxyde mélangée d'une quantité équivalente d'anhydride d'acide liquide, et le ruben et l'adhésif contenant un accélérateur de durcissement de la résine d'imprégnation. L'invention s'étend encore à un procédé de fabrication de cet isolant.

Pour les enroulements de machines à haute tension, l'isolation complète des conducteurs est réalisée avant introduction dans les encoches. La résine est introduite sous vide et sous pression dans le mur isolant obtenu par enveloppement des conducteurs à l'aide du ruban composite, et polymérisée sur chaque conducteur avant le bobinage de la machine.

Pour les machines à moyenne tension (de 1 à 6kV) et certaines machines à haute tension (jusqu'à 15kV), quand leurs dimensions le permettent, le bobinage est effectué avec des conducteurs enveloppés dans un isolant micacé posé à sec. La machine complètement bobinée est ensuite imprégnée globalement par une résine sans solvant par un procédé dit "d'imprégnation globalé", consistant en l'immersion de la machine dans la résine sans solvant et en un traitement par le vide et la pression spécifique de la machine et de la résine d'imprégnation utilisée.

Le support en tissu ou feutre de fibres de verre ou de résine synthétique a pour fonction de permettre au ruban à base de mica de supporter les efforts de traction lors de l'enrubannage à la main ou à la machine. Il constitue un renfort mécanique de l'isolant, ainsi qu'une voie de pénétration préférentielle de la résine de l'imprégnation, ce qui est particulièrement utile dans le cas d'isolations de forte épaisseur.

Le document DE—A— 1613273 décrit des adhésifs comprenant le produit de condensation de polyamines correspondant à la formule générale ci-dessus avec des résines époxydes. Il propoase en outre d'utiliser comme résine d'imprégnation une résine époxyde mélangée d'une quantité équivalente d'anhydride d'acide liquide. Toutefois le nombre de fonctions oxyranes des résines époxydes condensées avec les polyamines est supérieur au nombre de fonctiones amines, de sorte que les produits de condensation sont à terminaison oxyrane, et que leurs fonctions amines sont secondaires ou tertiaires. Il convient alors d'utiliser des résines époxydes à masse moléculaire (et par suite équivalent époxyde) relativement bas pour éviter une viscosité trop élevée du milieu réactionnel de fabrication du produit de condensation. Mais ceci conduit en général à des produits peu condensés, pouvant même être visqueux ou liquides à la température ambiante, et facilement solubles. Ces produits de condensation sont appliqués sur le ruban isolant à l'état dissous. Or, il convient d'éviter toute migration du liant dans la cuve de la résine d'imprégnation, où il resquerait de gélifier celle-ci. Il est particulièrement intéressant d'avoir des produits fortement condensés, solides, hautement réactifs, ne risquant pas de diffuser dans la résine d'impégnation à des températures inférieures à la température de gélification.

La stoechiométrie utilisée pour des condensats amine-résine époxyde du document DE—A 1613273 conduisant à des produits à terminaison oxyrane, ces groupements terminaux n'ont aucune action catalytique sur la réaction de durcissement époxyde-anhydride d'acide de la résine d'imprégnation. Aussi, l'activation de cette réaction ne se fait que par l'intermédiaire de quelques groupements amines secondaires ou tertiaires situés en cours de chaîne de polycondensat, donc moins accessibles et moins réactifs.

La présente invention a pour but de remédier aux inconvénients ci-dessus. Le produit de condensation obtenu est franchement solide à la température ambiante et peut être appliqué à l'état solide sur le ruban isolant, étant cependant rapidement soluble dans la résine époxyde d'imprégnation à partir de 80°C, qui est en général la température de gélification adoptée pour cette résine. Le produit de condensation obtenu a des terminaisons amines primaires et peut contenir des fonctions amines secondaires et tertiaires en cours de chaîne, ce qui le rend particulièrement réactif au niveau de la fonction oxyrane de la résine d'imprégnation, et lui confère un effet accélérateur au niveau de la réaction époxyde-anhydride d'acide de la résine d'imprégnation. De cette façon il est possible d'obtenir une gélification rapide de la résine d'imprégnation et ainsi de limiter au maximum les pertes de résine au moment de la cuisson des matériels imprégnés. La présente invention a encore pour but d'assurer un collage du ruban à base de mica sur le support à l'aide d'un adhésif en très faible quantité, sans solvant, tout en procurant une bonne cohésion du ruban micacé obtenu. Elle a enfin pour but d'effectuer le collage à l'aide d'un adhésif qui ne forme pas un film continu qui nuirait à la porosité du ruban micacé.

L'isolant selon l'invention est caractérisé en ce que la résine époxyde à condenser avec le polyamine est une résine époxyde solide du bisphénol A ayant deux groupes oxyrane en bout

de chaîne et d'équivalent époxyde compris entre 400 et 1500, ou bien une résine époxyde novolaque d'équivalent époxyde compris entre 150 et 300, ou un mélange de ces deux dernières, et en ce que les quantités respectives de polyamide et de résine époxyde à condenser sont telles qu'il subsiste dans le produit de condensation un excès de fonctions amines.

Il répond en outre de préférence à au moins l'une des caractéristiques suivantes:

—Le produit de condensation de la polyamine avec la résine époxyde est de point de fusion compris entre 75° et 160°C environ.
—La polyamine est la diéthylène triamine ou le tétraéthylène pentamine.
—La résine époxyde à condenser avec la polyamine est une résine époxyde solide du bisphénol A d'équivalent époxyde compris entre 400 et 1000.
—La résine époxyde d'imprégnation est une résine époxyde cycloaliphatique mélangée d'une quantité équivalente d'un anhydride d'acide liquide.
—La résine époxyde d'imprégnation est une résine époxyde du bisphénol A mélangée d'une quantité équivalente d'un anhydride d'acide liquide.
—L'anhydride d'acide liquide est choisi dans le groupe comprenant les anhydrides méthyltétrahydrophtalique, méthyl-hexahydrophtalique, méthyl-nadic et méthyl-himic.

Le procédé de fabrication de l'isolant selon l'invention, dans lequel on entoure les conducteurs à isoler à l'aide d'un ruban composite et où on imprègne le ruban composite d'isolation, à chaud, par une résine d'imprégnation comprenant une résine époxyde mélangée d'une quantité équivalente d'anhydride d'acide liquide, puis les laisse se refroidir, ledit ruban comprenant un ruban à base de mica ou de papier de mica collé après chauffage sur un support en tissu ou feutre de fibres de verre ou de résine synthétique, à l'aide d'un adhésif comprenant le produit de condensation d'une polyamine de formule générale

$$H_2N—(CH_2)_n—[NH—(CH_2)_p]_q—NH_2,$$

dans laquelle n et p sont des nombres entiers de 1 à 5, et q est un nombre entier de 0 à 5, avec une résine époxyde, est caractérisé en ce qu'on applique l'adhésif sur le ruban à l'état de poudre en quantité comprise entre 2 et 20 gr/m², et en ce que la résine époxyde à condenser avec la polyamine est une résine époxyde solide du bisphénol A ayant deux groupes oxyranes en bout de chaîne et d'équivalent époxyde compris entre 400 et 1500, ou bien une résine époxyde novolaque d'équivalent époxyde compris entre 150 et 300, ou un mélange de ces deux dernières, et en ce que les quantités respectives de polyamine et de résine époxyde à condenser sont telles qu'il subsiste dans le produit de condensation un excès de fonctions amines.

Il est décrit ci-après, à titre d'exemple et en référence aux figures du dessin annexé, la préparation de divers produits de condensation formant matériaux adhésifs au cours de la fabrication d'isolants selon l'invention, ainsi que les propriétés de résines d'imprégnation essayées avec de tels produits de condensation.

Exemple 1

On introduit dans 100 parties en poids d'un solvant aromatique (toluène) 100 parties et poids d'une résine époxyde du bisphénol A, d'équivalent époxyde 500 environ, et 20 parties en poids de diéthylène triamine. On porte à ébullition à reflux à 60°—70°C pendant 4 à 5 heures le mélange, puis on élève la température jusqu'à distillation complète du solvant et de l'excès d'amine. Le produit restant est alors coulé à chaud, refroidi et broyé. Son point de fusion est d'environ 80°C.

Exemple 2

On procède de même que dans l'exemple 1 avec 100 parties en poids de solvant, 100 parties en poids d'une résine époxyde du bisphénol A d'équivalent époxyde 900 environ et 12 parties en poids de diéthylène triamine. Le point de fusion du produit d'addition obtenu est d'environ 120°C.

Exemple 3

On procède de même que dans l'exemple 1 avec 100 parties en poids de solvant, 100 parties en poids d'une résine époxyde du bisphénol A d'équivalent époxyde 500 environ et 32 parties en poids de tétraéthylène pentamine. Le point de fusion de produit obtenu est d'environ 85°C.

Les produits adhésifs en poudre obtenus dans les exemples ci-dessus, amenés à une granulométrie comprise entre 100 et 400 µm sont utilisés pour coller du papier de mica ou des clivures de mica sur un support, à raison de 2 à 20g par mètre carré à l'aide d'un applicateur spécial pour produit pulvérulent, de type connu. Le support et le papier de mica ou les clivures de mica sont collés l'un à l'autre à chaud. La quantité d'adhésif utilisée doit être la quantité minimale nécessaire pour assurer une bonne adhésion entre le mica et son support.

De cette manière, l'accélérateur de polymérisation constitué par les fonctions amines du produit de condensation est fixé dans le ruban composite d'isolation et ne migre pas dans la résine du bain d'imprégnation, même à des températures de l'ordre de 60°C.

Exemple 4

On met en contact avec le ruban composite comprenant l'adhésif selon l'exemple 1, une résine époxyde cycloaliphatique d'équivalent époxyde environ 160, mélangée avec une

quantité équivalente d'anhydride méthyl-hexahydrophtalique.

La figure 1 du dessin représente la variation en fonction du temps T (en heures) de la viscosité à 80°C en millipascals-sec du bain de résine (qui constitute un indice de la réactivité de la résine).

La courbe 1 en trait interrompu représente la variation de viscosité de la résine neuve.

La courbe 2 en trait plein représente la variation de la viscosité de la résine préalablement mise en contact sous vide et pression par l'intermédiaire d'un ruban composite avec l'adhésif selon l'exemple 1, pendant 6 cycles de 4 heures à 40°C. On ne constate pas d'évolution de la réactivité de la résine de la cuve de stockage, donc pas de migration de l'adhésif dans la résine lors des imprégnations.

En suivant l'évolution de la viscosité à 20°C de la résine de cet exemple avant imprégnation et après imprégnation de barres fabriquées avec un ruban comportant l'adhésif selon l'exemple 1 (pendant 6 cycles de 4 heures à 40°C), on observe que les valeurs de la viscosité ne sont pas modifiées (290 mPas initialement, 290 mPas après 24h, 330 mPas après 100h, 480 mPas après 500h).

La figure 2 représente l'évolution du pourcentage d'insoluble de la même résine à 80°C en fonction du temps T (en heures), mesuré par extraction par un mélange d'isopropanol (50% en volume) et de toluène, cette résine ayant été en contact d'une part avec un ruban poreux comportant un adhésif sans effet catalytique (courbe 1 en trait interrompu), d'autre part avec un ruban comportant l'adhésif selon l'exemple 1 (courbe 2 en trait plein). On voit l'effet accélérateur de l'adhésif sur la résine, entraînant sa gélification.

Exemple 5

On met en contact avec le ruban composite comprenant l'adhésif selon l'exemple 2 une résine époxyde du bisphénol A d'équivalent époxyde environ 180, mélangée avec une quantité équivalente d'anhydride méthyl-hexahydrophtalique.

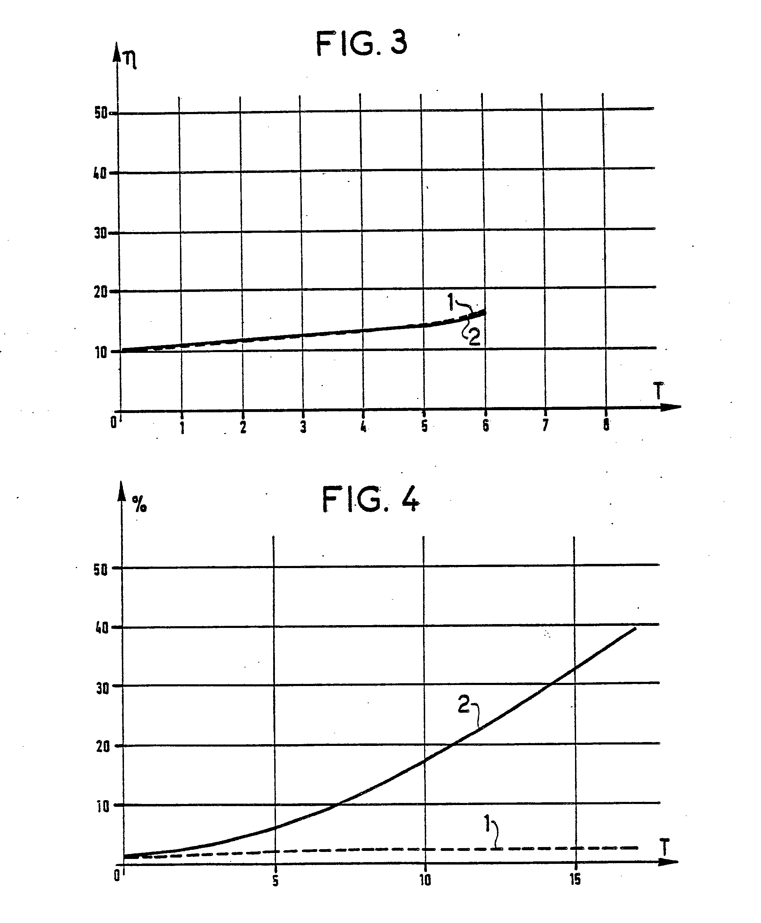

La figure 3 représente la variation en fonction du temps T (en heures) de la viscosité $\eta$ à 80°C (en millipascals-sec) du bain de résine. La courbe 1 en trait interrompu représente la variation de la viscosité de la résine neuve. La courbe 2 en trait plein représente la variation de la viscosité de la résine préalablement mise en contact sous vide et pression par l'intermédiaire d'un ruban composite avec d'adhésif selon l'exemple 2, pendant 6 cycles de 4 heures à 40°C. On ne constate pas non plus d'évolution de la réactivité de la résine de la cuve de stockage, donc pas de migration de l'adhésif dans la résine lors des imprégnations.

La figure 4 représente l'évolution du pourcentage d'insoluble de la même résine à 80°C en fonction du temps T (en heures), mesuré par extraction par un mélange d'isopropanol (50% en volume) et de toluène, cette résine ayant été en contact d'une part avec un ruban poreux comportant un adhésif sans effet catalytique (courbe 1 en trait interrompu) et d'autre part avec un ruban comportant l'adhésif selon l'exemple 2 (courbe 2 en trait plein).

Bien que l'adhésif et son procédé de préparation qui viennent d'être décrits en référence aux exemples paraîssent des formes de réalisation préférables de l'invention, d'autres polyamines que la diéthylène triamine et la tétraéthylène pentamine, notamment la triéthylène tétramine, pourraient convenir.

## Revendications

1. Isolant pour bobinages à haute et moyenne tension, en particulier de machines électriques, comprenant un ruban à base de mica ou de papier de mica collé sur un support en tissu ou feutre de fibres de verre ou de résine synthétique, à l'aide d'un adhésif comprenant le produit de condensation d'une polyamine de formule générale

$$H_2N—(CH_2)_n—[NH—(CH_2)_p]_q—NH_2$$

dans laquelle n et p sont des nombres entiers de 1 à 5, et q est un nombre entier de 0 à 5, avec une résine époxyde, ledit ruban étant, après enroulement sur un conducteur, imprégné d'une résine d'imprégnation comprenant une résine époxyde mélangée d'une quantité équivalente d'anhydride d'acide liquide, et le ruban et l'adhésif contenant un accélérateur de durcissement de la résine d'imprégnation, caractérisée en ce que la résine époxyde à condenser avec la polyamine est une résine époxyde solide du bisphénol A ayant des groupes oxyranes en bout de chaîne et d'équivalent époxyde compris entre 400 et 1500, ou bien une résine époxyde novolaque d'équivalent époxyde compris entre 150 et 300, ou un mélange de ces deux dernières, et en ce que les quantités respectives de polyamine et de résine époxyde à condenser sont telles qu'il subsiste dans le produit de condensation un excès de fonctions amines.

2. Isolant selon la revendication 1, caractérisé en ce que ledit produit de condensation de la polyamine avec la résine époxyde est de point de fusion compris entre 75° et 160°C environ.

3. Isolant selon les revendications 1 ou 2, caractérisé en ce que la polyamine est la diéthylène triamine ou le tétraéthylène pentamine.

4. Isolant selon l'une des revendications 1 à 3, caractérisée en ce que la résine époxyde à condenser avec la polyamine est une résine époxyde solide du bisphénol A d'équivalent époxyde compris entre 400 et 1000.

5. Isolant selon l'une des revendications 1 à 4, caractérisé en ce que la résine époxyde d'imprégnation est une résine époxyde cycloaliphatique mélangée d'une quantité équivalente d'anhydride d'acide liquide.

6. Isolant selon l'une des revendications 1 à 4, caractérisé en ce que la résine époxyde d'imprégnation est une résine époxyde du bisphénol A mélangée d'une quantité équivalente d'anhydride d'acide liquide.

7. Isolant selon les revendications 5 ou 6, caractérisé en ce que l'anhydride d'acide liquide est choisi dans le groupe comprenant les anhydrides méthyl-tétrahydrophtalique, méthyl-hexahydrophtalique, méthyl-nadic et méthyl-himic.

8. Procédé de fabrication d'un isolant pour bobinages à haute et moyenne tension, en particulier de machines électriques, où on entoure les conducteurs à isoler à l'aide d'un ruban composite et où on imprègne le ruban composite d'isolation, à chaud, par une résine d'imprégnation comprenant une résine époxyde mélangée d'une quantité équivalente d'anhydride d'acide liquide, puis les laisse se refroidir, ledit ruban comprenant un ruban à base de mica ou de papier de mica collé après chauffage sur un support en tissu ou feutre de fibres de verre ou de résine synthétique, à l'aide d'un adhésif comprenant le produit de condensation d'une polyamide de formule générale

$$H_2N—(CH_2)_n—[NH—(CH_2)_p]_q—NH_2,$$

dans laquelle n et p sont des nombres entiers de 1 à 5, et q est un nombre entier de 0 à 5, avec une résine époxyde, caractérisé en ce qu'on applique l'adhésif sur le ruban à l'état de poudre en quantité comprise entre 2 et 20 g/m², et en ce que la résine époxyde à condenser avec la polyamine est une résine époxyde solide de bisphénol A ayant deux groupes oxiranes en bout de chaîne et d'équivalent époxyde compris entre 400 et 1500, ou bien une résine époxyde novoloque d'équivalent époxyde compris entre 150 et 300, ou un mélange de ces deux dernières, et en ce que les quantités respectives de polyamines et de résine époxyde à condenser sont telles qu'il subsiste dans le produit de condensation un excès de fonctions amines.

**Patentansprüche**

1. Isolierstoff für Hoch- und Mittelspannungswicklungen, insbesondere von elektrischen Maschinen, mit einem Band auf Glimmer- oder Glimmerpapierbasis, das auf einen Träger aus Gewebe oder Filz von Glasfasern oder Kunstharzfasern mithilfe eines Klebers aufgeklebt ist, der das Kondensationsprodukt eines Polyamins der allgemeinen Formel

$$H_2N—(CH_2)_n—[NH—(CH_2)_p]_q—NH_2$$

mit einem Epoxidharz enthält, wobei n und p ganze Zahlen von 1 bis 5 und q eine ganze Zahl von 0 bis 5 sind und wobei das Band nach dem Aufwickeln auf einen Leiter mit einem Imprägnierharz imprägniert wird, das ein mit einer äquivalenten Menge flüssigen Säureanhydrids vermischtes Epoxidharz aufweist, und das Band und der Kleber einen Härtungsbeschleuniger für das Imprägnierharz enthalten, dadurch gekennzeichnet, daß das mit dem Polyamin zu kondensierende Epoxidharz ein festes Epoxidharz des Bisphenol A mit zwei Oxyrangruppen am Ende der Kette und einem Epoxid-Äquivalent zwischen 400 und 1500 oder ein Novolack-Epoxidharz eines Epoxid-Äquivalents zwischen 150 und 300 oder eine Mischung der beiden letzteren ist, und daß die jeweiligen Mengen von Polyamin und zu kondensierendem Epoxidharz so gewählt sind, daß im Kondensationsprodukt ein Überschuß von Aminfunktionen verbleibt.

2. Isolierstoff nach Anspruch 1, dadurch gekennzeichnet, daß das Kondensationsprodukt des Polyamins mit dem Epoxidharz einen Schmelzpunkt zwischen etwa 75 und 160°C hat.

3. Isolierstoff nach den Ansprüchen 1 oder 2, dadurch gekennzeichnet, daß das Polyamin Diäthylentriamin oder Tetraäthylenpentamin ist.

4. Isolierstoff nach einem der Ansprüche 1 bis 3, dadurch gekennzeichnet, daß das mit dem Polyamin zu kondensierende Epoxidharz ein festes Epoxidharz des Bisphenol A eines Epoxid-Äquivalents zwischen 400 und 1000 ist.

5. Isolierstoff nach einem der Ansprüche 1 bis 4, dadurch gekennzeichnet, daß das Epoxidharz zur Imprägnierung ein cycloaliphatisches Epoxidharz, vermischt mit einer äquivalenten Menge eines flüssigen Säureanhydrids ist.

6. Isolierstoff nach einem der Ansprüche 1 bis 4, dadurch gekennzeichnet, daß das Epoxidharz zur Imprägnierung ein Epoxidharz des Bisphenol A vermischt mit einer äquivalenten Menge eines flüssigen Säureanhydrids ist.

7. Isolierstoff nach den Ansprüchen 5 oder 6, dadurch gekennzeichnet, daß das flüssige Säureanhydrid aus der Gruppe ausgewählt wird, die das Methyl-tetrahydrophthalanhydride, das Methyl-hexahydrophthal-anhydrid, das Methyl-nadin-anhydrid und das Methyl-himin-anhydrid enthält.

8. Verfahren zur Herstellung eines Isolierstoffs für Hochung Mittelspannungswicklungen, insbesondere für elektrische Maschinen, bei dem man die zu isolierenden Leiter mithilfe eines Kombibandes umgibt und das Kombi-Isolierband warm mit einem Imprägnierharz imprägniert, das ein mit einer äquivalenten Menge flüssigen Säureanhydrids vermischtes Epoxidharz enthält, und die Leiter dann abkühlen läßt, wobei das Band ein Band auf der Basis von Glimmer oder Glimmerpapier ist, das nach Erhitzen auf einen Träger aus Gewebe oder Filz von Glasfasern oder Synthetikharzfasern geklebt wird, mithilfe eines Klebers, der das Kondensationsprodukt eines Polyamins der allgemeinen Formel

$$H_2N—(CH_2)_n—[NH—(CH_2)_p]_q—NH_2$$

mit einem Epoxidharz enthält, wobei n und p ganze Zahlen von 1 bis 5 und q eine ganze Zahl von 0 bis 5 sind, dadurch gekennzeichnet, daß man den Kleber im Pulverzustand auf das Band in einer Menge zwischen 2 und 20 g/m² aufbringt und daß das mit dem Polyamin zu kondensierende Epoxidharz ein festes Epoxidharz von Bisphenol A mit zwei Oxyrangruppen am Ende der Kette und einem Epoxid-Äquivalent zwischen 400 und 1500 oder ein Novolack-Epoxidharz eines Epoxid-Äquivalents zwischen 150 und 300, oder eine Mischung der beiden letzteren ist, und daß die jeweiligen Mengen des zu kondensierenden Polyamins und Epoxidharzes so gewählt sind, daß im Kondensationsprodukt ein Überschuß an Aminfunktionen bleibt.

**Claims**

1. An insulator for high and medium voltage windings, particularly for electrical machines, comprising a tape based on mica or mica paper which is glued on a textile or felt support made of glass or synthetic fibers, by means of an adhesive comprising the condensation product of a polyamine having the general formula

$$H_2N—(CH_2)_n—[NH—(CH_2)_p]_q—NH_2$$

with an epoxide resin, wherein n and p are integers from 1 to 5 and q is an integer from 0 to 5, said tape being impregnated after being wound on a conductor by an impregnation resin comprising an epoxide resin which is mixed with an equivalent quantity of liquid acid anhydride, and the tape and the adhesive containing a hardening accelerator of the impregnation resin, characterized in that the epoxide resin which is to condense with the polyamine is a solid epoxide resin of bisphenol A having two terminal oxyrane groups and an epoxide equivalent included between 400 and 1500, or a novolak epoxide resin having an epoxide equivalent included between 150 and 300 or a mixture of these latter products, and that the respective quantities of polyamine and of epoxide resin for condensation are chosen in such a way that an excess of amine functions subsists in the condensation product.

2. An insulator according to claim 1, characterized in that said condensation product of polyamine with epoxide resin has a fusion point included between about 75 and 160°C.

3. An insulator according to claim 1 or 2, characterized in that the polyamine is chosen from between diethylene triamine or tetraethylene pentamine.

4. An insulator according to one of claims 1 to 3, characterized in that the epoxide resin which is to be condensed with polyamine is a solid epoxide resin of bisphenol A having an epoxide equivalent included between 400 and 1000.

5. An insulator according to one of the claims 1 to 4, characterized in that the epoxide resin for impregnation is a cycloaliphatic epoxide resin which is mixed with an equivalent quantity of liquid acid anhydride.

6. An insulator according to one of claims 1 to 4, characterized in that the impregnation epoxide resin is an epoxide resin of bisphenol A mixed with an equivalent quantity of liquid and anhydride.

7. An insulator according to claim 5 or 6, characterized in that the liquid acid anhydride is chosen out of the group containing the methyltetrahydrophthalic, the methyl-hexahydrophthalic, the methyl-nadic and the methyl-himic anhydrides.

8. A process for manufacturing an insulator for high and medium voltage windings, particularly of electrical machines, according to which the conductors to be insulated are enveloped in a composite type and the composite insulator tape is hot impregnated with an impregnation resin comprising an epoxide resin which is mixed with an equivalent quantity of liquid acid anhydride, then being cooled down, said tape comprising a tape on the basis of mica or mica paper glued after heating on a textile or felt support of glass or synthetic fibres by means of an adhesive comprising the condensation product of a polyamine according to the general formula

$$H_2N—(CH_2)_n—[NH—(CH_2)_p]_q—NH_2$$

with an epoxide resin, wherein n and p are integers between 1 and 5 and q is an integer between 0 and 5, characterized in that the adhesive is applied to the tape in powder form and in a quantity included between 2 and 20 g/m², and that the epoxide resin which is to condense with the polyamine is a solid epoxide resin of the bisphenol A having two terminal oxyrane groups and an epoxide equivalent included between 400 and 1500 or a novolak epoxide resin having an epoxide equivalent included between 150 and 300 or a mixture of these two latter products, and that the respective quantities of polyamine and of epoxide resin which are to condense are chosen in such a way that an excess of amine functions subsists in the condensation product.

FIG. 1

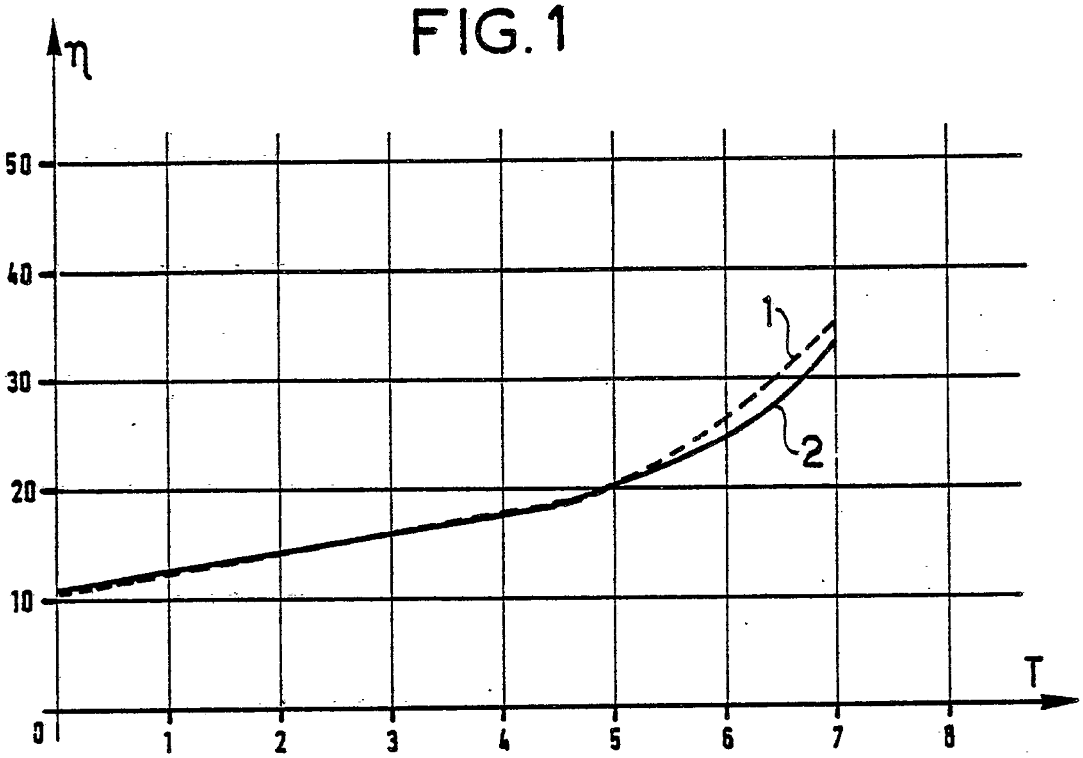


FIG. 2

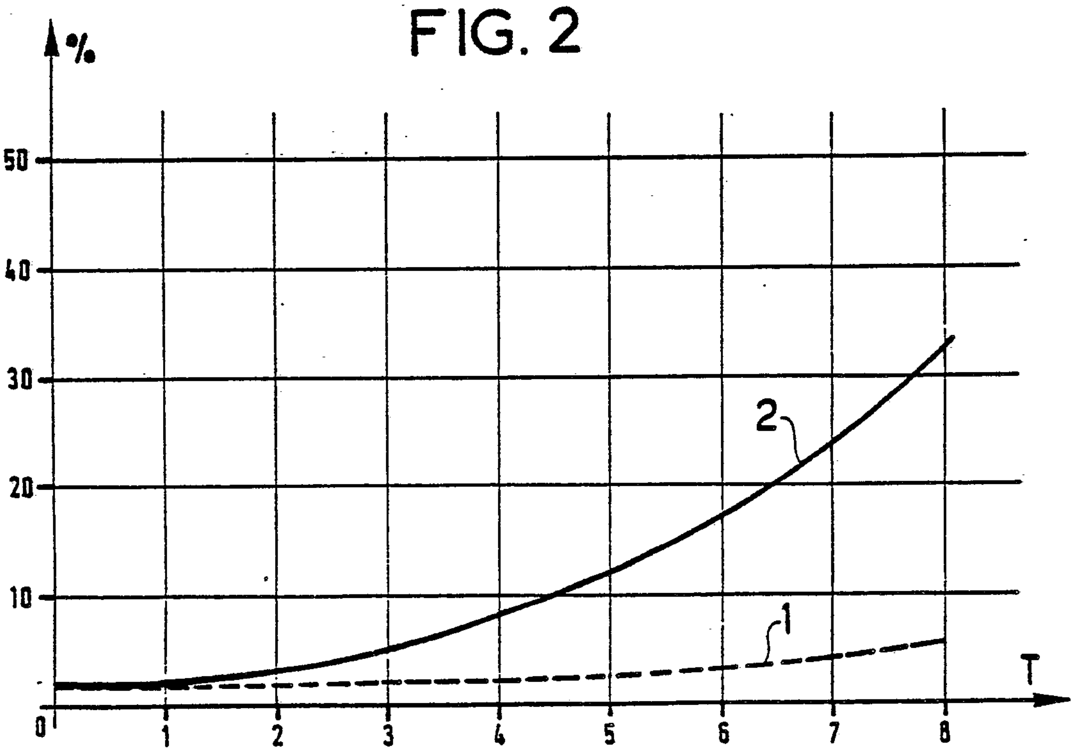

FIG. 3

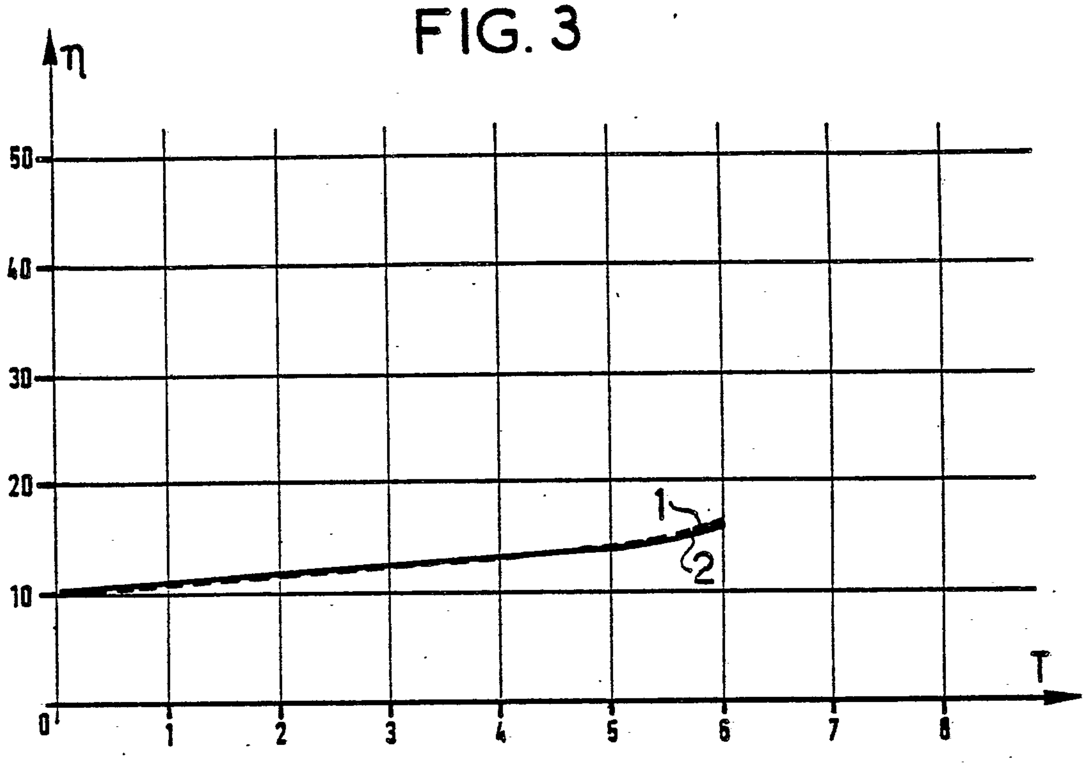


FIG. 4